(19) **Europäisches Patentamt**

**European Patent Office**

**Office européen des brevets**

(11) **EP 1 214 504 B1**

(12) **FASCICULE DE BREVET EUROPEEN**

(45) Date de publication et mention
de la délivrance du brevet:
**23.03.2005 Bulletin 2005/12**

(21) Numéro de dépôt: **00964316.4**

(22) Date de dépôt: **19.09.2000**

(51) Int Cl.⁷: **F01N 3/08**, F01N 3/20,
F01N 3/22, F01N 9/00,
F01N 11/00

(86) Numéro de dépôt international:
**PCT/FR2000/002590**

(87) Numéro de publication internationale:
**WO 2001/021942 (29.03.2001 Gazette 2001/13)**

(54) **PROCEDE ET SYSTEME DE SURVEILLANCE DU FONCTIONNEMENT DES POTS CATALYTIQUES D'UN MOTEUR A COMBUSTION INTERNE**

VERFAHREN UND VORRICHTUNG ZUR FUNKTIONSÜBERWACHUNG EINES KATALYSATORS FÜR EINE BRENNKRAFTMASCHINE

METHOD AND SYSTEM FOR MONITORING THE OPERATING CONDITIONS OF AN INTERNAL COMBUSTION ENGINE CATALYTIC CONVERTERS

(84) Etats contractants désignés:
**DE ES GB IT**

(30) Priorité: **21.09.1999 FR 9911785**

(43) Date de publication de la demande:
**19.06.2002 Bulletin 2002/25**

(73) Titulaire: **Renault s.a.s.**
**92100 Boulogne Billancourt (FR)**

(72) Inventeurs:
• **BEURTHEY, Stephan**
**F-91310 Leuville sur Orge (FR)**
• **GABAUT, Christophe**
**F-91590 Baulne (FR)**
• **PINEAU, Antoine**
**F-92190 Meudon (FR)**

(56) Documents cités:
**EP-A- 0 867 604** **EP-A- 0 908 608**
**EP-A- 0 926 321** **WO-A-96/41071**
**US-A- 5 088 281** **US-A- 5 509 267**

**Description**

L'invention concerne un procédé de surveillance du fonctionnement d'au moins deux pots catalytiques équipant le circuit des gaz d'échappement d'un moteur à combustion interne, fonctionnant en mélange pauvre. Elle concerne également un système de mise en oeuvre de ce procédé.

Pour réduire la pollution de l'atmosphère occasionnée par les gaz d'échappement des moteurs à combustion interne des véhicules automobiles notamment, il est courant d'équiper chacune des lignes du circuit des gaz d'échappement d'un pot catalytique dont la fonction est de transformer les espèces chimiques émises par la combustion, et qui sont nocives, en substances non polluantes par un procédé de catalyse en postcombustion.

I1 existe un type de pot catalytique, dit à trois voies ou trifonctionnel, qui assure une triple fonction d'oxydation des hydrocarbures imbrûlés (HC), d'oxydation du monoxyde de carbone (CO) en dioxyde de carbone ($CO_2$), et de réduction des oxydes d'azote ($NO_x$) en azote gazeux ($N_2$).

Dans le cas d'un mélange de richesse supérieure à 1, il y a un excès de molécules réductrices qu'il faut éliminer par un apport d'oxygène ($O_2$), alors que dans le cas d'un mélange pauvre, il faut en partie stocker les molécules oxydantes ($O_2$, $NO_x$) en excès pour oxyder les molécules réductrices (HC, C0).

Le souci de réduire les émissions de gaz à effet de serre, et en particulier le dioxyde de carbone, a incité les constructeurs à réaliser des moteurs à combustion interne capables de fonctionner en mélange pauvre, c'est-à-dire avec un rapport inférieur à la stoechiométrie. Mais un pot catalytique trifonctionnel classique, utilisé pour dépolluer les gaz d'échappement d'un moteur fonctionnant en mélange pauvre, n'est pas très efficace pour réduire les $NO_x$ car il y a une forte proportion d'oxygène.

Pour pallier cet inconvénient, il est connu d'utiliser un pot catalytique trifonctionnel comprenant en plus des moyens d'absorption des $NO_x$ présents dans les gaz d'échappement, à richesse inférieure à 1. Pour éviter que cette absorption ne finisse par saturer la capacité d'absorption du catalyseur, le procédé décrit dans la demande de brevet européen, publiée sous le numéro 0 560 991 A1 au nom de TOYOTA, propose de commuter périodiquement la richesse du mélange air/carburant du moteur à une valeur supérieure ou égale à 1 pour obtenir un mélange stoechiométrique ou riche. Cette commutation provoque la désorption des $NO_x$ absorbés dans le pot catalytique, puis leur réduction par les hydrocarbures HC et le monoxyde de carbone CO présents dans le pot à cause de l'accroissement de la richesse du mélange.

Etant donné que la capacité de stockage en oxydes d'azote décroît fortement en-dessous de 200°C et au-dessus de 500°C, il faut positionner le catalyseur à absorption de $NO_x$ loin du moteur pour qu'il ne subisse pas de trop fortes températures. Mais cette position entraîne une montée en chaleur assez lente et un traitement tardif des polluants lors des démarrages du moteur à froid. C'est pourquoi une solution consiste à ajouter un deuxième catalyseur trifonctionnel, dit d'amorçage, situé près du moteur et avant le catalyseur principal d'absorption des $NO_x$, dit de stockage, et destiné à traiter rapidement les substances polluantes à la stoechiométrie alors que le catalyseur principal est encore froid.

Le problème que cherche à résoudre l'invention concerne la surveillance de l'efficacité du traitement des hydrocarbures émis par un moteur à combustion interne fonctionnant en mélange pauvre et équipé d'au moins un pot catalytique d'amorçage placé devant au moins un pot catalytique de stockage des $NO_x$.

L'efficacité de traitement des hydrocarbures d'un pot catalytique trifonctionnel dépend de l'état de sa surface catalytique en contact avec les gaz d'échappement, apprécié notamment par sa capacité de stockage en oxygène. Cependant, pour un mélange pauvre, il n'est pas possible d'appliquer un procédé de mesure d'absorption en oxygène puisqu'il y a toujours un excès en oxygène qui sature le pot catalytique. De plus, dans le cas où la capacité en oxygène est réduite, un tel procédé est peu sensible à l'efficacité de traitement des hydrocarbures.

C'est pourquoi d'autres solutions ont été proposées pour un fonctionnement en mélange pauvre, notamment :

- la mesure d'exothermicité lors de l'oxydation des réducteurs ;
- la mesure de la composition gazeuse à l'aide d'un capteur calorimétrique ;
- la mesure de la teneur en hydrocarbures des gaz d'échappement en amont et en aval du pot catalytique à l'aide d'un ou de deux capteurs de mesure d'hydrocarbures, tel que cela est décrit dans la demande de brevet 97 12701, au nom de RENAULT.

Un autre moteur, présenté sur le document brevet EP 0 867 604 de Ford Global Technologies, est adapté pour fonctionner avec un mélange pauvre en hydrocarbures et est doté de deux pots catalytiques montés en série sur la sortie d'échappement du moteur. Des capteurs d'oxygène sont placés en amont et en aval de chacun des pots catalytiques afin de mesurer la teneur en oxygène des gaz d'échappements en différents endroits de l'ensemble de pots catalytiques, et permettre ainsi de fournir des informations à un calculateur ayant pour fonction de commander la purge, en $NO_x$ des pots catalytiques. La purge est réalisée en enrichissant si besoin le mélange injecté dans le moteur. Ce moteur ne permet pas d'évaluer l'efficacité de traitement des hydrocarbures par l'ensemble des pots catalytiques.

Lorsque la ligne d'échappement comprend un pot catalytique d'amorçage, proche du moteur et ayant une faible capacité de stockage en oxygène, suivi d'un autre pot catalytique ayant par contre une forte capacité de stockage en oxygène, les procédés actuels ne surveillent que le premier pot catalytique. Aussi, une insuffisance d'efficacité du traitement des hydrocarbures peut être diagnostiquée pour le pot d'amorçage et aboutir à une conclusion de défaillance de l'ensemble du système de traitement des gaz d'échappement, alors que le pot catalytique de stockage présente une bonne efficacité. Un diagnostic de défaut sur le traitement des hydrocarbures peut être fait alors que la ligne d'échappement globale fonctionne de façon suffisante et satisfaisante.

Le but de l'invention est de pallier cet inconvénient en proposant d'établir un diagnostic simultané de fonctionnement pour chacun des pots catalytiques de la ligne d'échappement d'un moteur à combustion interne, afin d'en déduire l'efficacité de traitement des hydrocarbures de l'ensemble des pots catalytiques.

Pour cela, un premier objet de l'invention est un procédé de surveillance du fonctionnement d'au moins deux pots catalytiques équipant le circuit des gaz d'échappement d'un moteur à combustion interne, piloté par un calculateur de contrôle et fonctionnant en mélange air-carburant pauvre, au moins un pot catalytique étant de type pot d'amorçage à faible capacité d'absorption en oxygène et proche du moteur, suivi d'un pot catalytique de type stockage des oxydes d'azote, caractérisé en ce qu'il réalise deux diagnostics distincts et simultanés :

- une évaluation de l'efficacité de traitement des hydrocarbures par le pot catalytique d'amorçage ;
- une évaluation de la capacité d'absorption en oxygène par le pot catalytique de stockage, après chaque phase de commutation de la richesse passant d'une valeur Rp correspondant à un mélange pauvre à une valeur Rr correspondant à un mélange riche ou stoechiométrique, cette commutation servant à purger le pot catalytique des oxydes d'azote stockés
- une comparaison du résultat de ces deux évaluations simultanées avec une courbe de référence $C_{HC}$ représentant la limite de l'ensemble des combinaisons possibles de pots catalytiques d'amorçage d'une part, et de stockage d'autre part, le fonctionnement desdits au moins deux pots catalytiques d'amorçage et de stockage étant jugé satisfaisant, en terme de traitement d'hydrocarbure, lorsque le résultat de ces deux évaluations simultanées est situé au-delà de ladite courbe de référence, et étant jugé insatisfaisant lorsque le résultat de ces deux évaluations simultanées est situé en deçà de ladite courbe.

Un second objet de l'invention est un système de surveillance mettant en oeuvre le procédé ci-dessus, pour un moteur à combustion interne piloté par un calculateur de contrôle et dont le circuit des gaz d'échappement comprend au moins un pot catalytique d'amorçage suivi d'au moins un pot catalytique de stockage, le système comprenant en outre :

- un capteur de mesure de la concentration en oxygène placé en aval du pot catalytique de stockage ;
- un capteur de mesure du régime N du moteur ;

le système étant caractérisé en ce qu'il comprend :

- un capteur de mesure de la concentration en hydrocarbures placé en aval du pot catalytique ;
- un capteur de pression dans le collecteur d'admission du moteur,

chacun desdits capteurs délivrant des informations au calculateur électronique et ledit calculateur électronique étant adapté pour évaluer l'efficacité de fonctionnement de l'ensemble des pots catalytiques en fonction desdites informations délivrées.

D'autres caractéristiques et avantages de l'invention apparaîtront à la lecture de la description de plusieurs modes de réalisation, illustrée par les figures suivantes qui sont :

- la figure 1 : un schéma fonctionnel d'une ligne d'échappement d'un moteur à combustion interne ;
- la figure 2 : un exemple de courbe de référence de l'efficacité de traitement des hydrocarbures d'un système catalytique ;
- les figures 3 à 5 : trois variantes de procédé de surveillance selon l'invention.

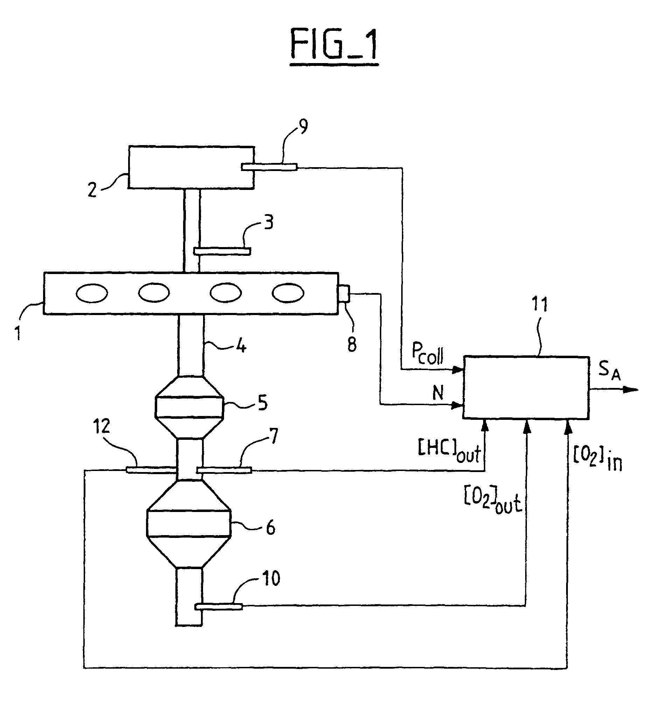

Le procédé de surveillance du fonctionnement d'un système de pots catalytiques selon l'invention s'applique à une ligne d'échappement d'un moteur à combustion interne 1, alimenté en air par le collecteur d'admission 2 et en carburant par différents injecteurs 3 comme le montre la figure 1. Les gaz d'échappement résultant de la combustion du mélange air/carburant dans les cylindres sont évacués par au-moins une ligne d'échappement constituée par un conduit 4 d'échappement relié au moteur par un flexible, un système de catalyse et différents capteurs. Le système de catalyse des gaz comprend au-moins un pot catalytique d'amorçage 5, proche du moteur 1 et ayant une faible capacité de stockage en oxygène, suivi d'au-moins un pot catalytique 6 de stockage des $NO_x$, ayant une plus grande capacité de stockage de l'oxygène que le précédent.

Les différents capteurs nécessaires à la mise en oeuvre du procédé de surveillance sont par exemple, en fonction des différents modes de réalisation du système de surveillance :

- un capteur 7 de mesure de la teneur en hydrocarbures $[HC]_{out}$ en aval du catalyseur d'amorçage 5,
- un capteur 8 de mesure de la vitesse de rotation du moteur N ;

- un capteur 9 de la pression dans le collecteur $P_{coll}$. Ce capteur peut être remplacé par un dispositif de mesure du débit d'air ;
- un capteur 10 de mesure de la concentration en oxygène $[O_2]_{out}$ dans le conduit d'échappement en aval du catalyseur de stockage 6 ;
- un capteur 12 de mesure de la concentration en oxygène $[O_2]_{in}$ dans le conduit d'échappement en amont du catalyseur de stockage 6.

Ces différentes mesures sont envoyées à un calculateur électronique 11 destiné à évaluer l'efficacité de fonctionnement de l'ensemble des pots catalytiques disposés dans le flux des gaz d'échappement du moteur. En cas de diagnostic d'une dégradation de cette efficacité de fonctionnement par rapport à un seuil de référence, le calculateur émet un signal d'alarme $S_A$.

Selon une caractéristique essentielle, le procédé de surveillance selon l'invention réalise deux diagnostics distincts, simultanément :

- une évaluation de l'efficacité de traitement des hydrocarbures HC par le pot catalytique d'amorçage 5, par une des mesures connues précédemment évoquées ;
- une évaluation de la capacité d'absorption en oxygène par le pot catalytique de stockage 6, pendant chaque phase de commutation de la richesse passant d'une valeur correspondant à un mélange pauvre à une valeur correspondant à un mélange stoechiométrique ou riche, cette commutation servant à purger le pot catalytique des oxydes d'azote stockés ;
- une comparaison du résultat de ces deux évaluations simultanées avec une courbe de référence $C_{HC}$, représentant la limite de l'ensemble des combinaisons possibles de pots catalytiques d'amorçage d'une part et de stockage d'autre part jugé satisfaisant pour le traitement des hydrocarbures.

Selon un premier mode de réalisation du système de surveillance mettant en oeuvre ledit procédé, l'évaluation de l'efficacité de traitement des hydrocarbures par le catalyseur d'amorçage est effectuée à partir de la mesure de la teneur ou concentration en HC, obtenue à partir de la sonde 7 délivrant une valeur $[HC]_{out}$ en aval du catalyseur 5. Le calculateur 11 estime ensuite la concentration en HC entrant dans le pot catalytique d'amorçage 5 à partir des conditions de fonctionnement du moteur, c'est-à-dire du régime moteur N, de la pression dans le collecteur $P_{coll}$ et de la richesse. Puis le calculateur estime l'efficacité du pot catalytique 5, c'est-à-dire l'état de la surface catalytique $N_{ES}$ à partir des concentrations en hydrocarbures en amont $[HC]_{in}$ et en aval $[HC]_{out}$ du catalyseur 5, du régime moteur N et de la pression collecteur $P_{coll}$.

Parallèlement, le calculateur électronique 11 évalue l'efficacité de fonctionnement du catalyseur de stockage 6. Pour cela, il utilise une sonde à oxygène 10 placée en aval du catalyseur 6 qui délivre une information sur la concentration en $O_2$. Lors d'une phase de commutation de la richesse R, passant à l'instant $t_0$ d'une valeur $R_p$ correspondant à un mélange combustible pauvre à une valeur $R_r$ correspondant à un mélange stoechiométrique, voire riche, lorsque le catalyseur de stockage des oxydes d'azote commence à être purgé, la concentration en $O_2$ chute d'une valeur $[O_2]_1$ à une valeur $[O_2]_2$ très inférieure. Puis, lorsque la richesse du mélange redescend à la valeur $R_p$ pour un fonctionnement du moteur à nouveau en mélange pauvre, la concentration en $O_2$ va remonter.

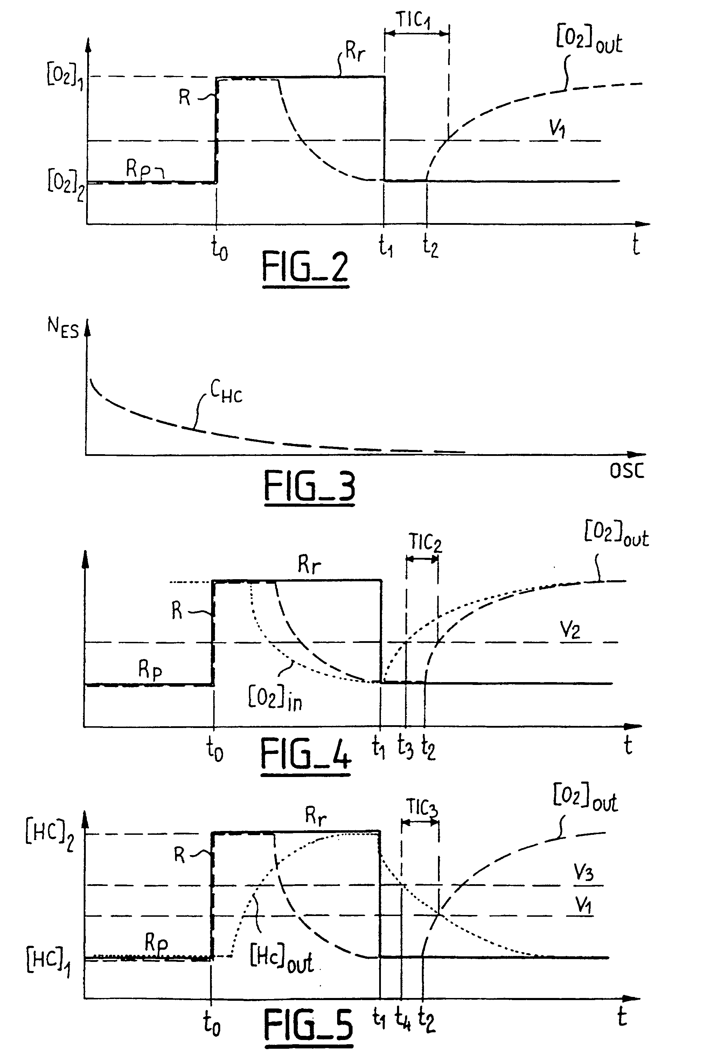

Le procédé selon l'invention consiste alors à mesurer le temps de retard TIC que met la concentration en oxygène $[O_2]_{out}$ mesurée par la sonde 10 à repasser au-dessus d'un seuil $V_1$ prédéfini, comme le montre la figure 2, qui montre l'évolution dans le temps de la richesse R du mélange et de la concentration $[O_2]$.

Puis, le procédé estime la capacité de stockage en oxygène OSC du catalyseur 6 à partir de ce temps de retard $TIC_1$, de la pression collecteur $P_{coll}$ et du régime moteur N. A partir de ces deux dernières variables est définie, lors de la mise au point du moteur, une table $g(P_{coll}, N)$ qui est stockée dans la mémoire du calculateur. La capacité OSC de stockage en $O_2$ est définie par :

$$OSC = TIC_1 * g(P_{coll}, N).$$

Le calculateur compare le résultat de ces deux estimations $N_{ES}$ et OSC à une courbe de référence $C_{HC}$ en deçà de laquelle il estime que l'ensemble des deux pots catalytiques d'amorçage et de stockage ne fonctionne pas bien en termes d'efficacité de traitement des hydrocarbures et au-delà de laquelle il fait l'estimation inverse.

La figure 3 représente l'ensemble des points $N_{ES}$ des catalyseurs d'amorçage en fonction des points OSC des catalyseurs de stockage, cet ensemble étant considéré comme satisfaisant pour le traitement des hydrocarbures au-dessus de la courbe limite $C_{HC}$ et mauvais en-dessous.

Selon un deuxième mode de réalisation, le calculateur électronique 11 évalue l'efficacité de fonctionnement du catalyseur de stockage des $NO_x$, en mesurant toujours à chaque phase de commutation de la richesse R d'une valeur supérieure ou égale à 1 à une valeur inférieure à 1, la concentration $[O_2]_{out}$ en $O_2$ en aval du catalyseur 6 par la sonde 10 mais également la concentration $[O_2]_{in}$ en $O_2$ en amont de ce même catalyseur par une autre sonde 12.

Puis, après chaque régénération des pièges à $NO_x$, le catalyseur mesure le temps de retard $TIC_2$ entre les deux concentrations $[O_2]_{out}$ en aval et $[O_2]_{in}$ en amont du pot catalytique 6 lors de leur passage aux ins-

tants $t_2$ et $t_3$ au-dessus du seuil $V_2$ prédéfini, comme le montre la figure 4.

La capacité de stockage en oxygène OSC du catalyseur 6 est alors le produit de ce temps de retard $TIC_2$ par une autre table h ($P_{coll}$, N) stockée dans la mémoire du calculateur :

$$OSC = TIC_2 * h(P_{coll}, N).$$

Selon un troisième mode de réalisation, l'efficacité de fonctionnement du catalyseur de stockage 6 est encore évaluée à partir de la concentration $[O_2]_{out}$ en oxygène en aval du catalyseur de stockage et en plus à partir de la capacité de la concentration $[HC]_{out}$ en hydrocarbures en aval du catalyseur d'amorçage 5, mais toujours lors de la commutation de la richesse d'un mélange pauvre à un mélange riche pour purger le catalyseur entre les instants $t_0$ et $t_1$. Au cours de cette régénération, de l'instant $t_0$ à l'instant $t_1$, la concentration $[HC]_{out}$ en hydrocarbures délivrée par la sonde 7 augmente d'une valeur $[HC]_1$ en mélange pauvre à une valeur $[HC]_2$ en mélange riche, puis elle chute à l'instant $t_1$ quand la richesse redescend en-dessous de 1.

Le calculateur électronique mesure alors, après chaque régénération, le temps de retard $TIC_3$ entre le passage à l'instant $t_4$ de la concentration $[HC]_{out}$ en hydrocarbures en-dessous d'un seuil prédéfini $V_3$ et le passage à l'instant $t_2$ de la concentration $[O_2]$ en oxygène au-dessus du seuil $V_1$. La capacité de stockage en oxygène du catalyseur est donnée par le produit du temps de retard $TIC_3$ par une autre table j, stockée dans la mémoire du calculateur :

$$OSC = TIC_3 * j (P_{coll}, N).$$

Pour ces deux modes de réalisation, le calculateur estime parallèlement l'efficacité $N_{ES}$ du pot catalytique 5 d'amorçage et compare le résultat de ces deux estimations à la courbe de référence.

Selon un quatrième mode de réalisation, la variante porte sur l'évaluation de l'efficacité du pot catalytique d'amorçage, non plus à partir de la concentration [HC] en hydrocarbures, mais par une mesure d'exothermicité lors de l'oxydation des réducteurs ou par une mesure de la composition gazeuse à l'aide d'un capteur calorimétrique. Dans le cas d'une mesure d'exothermicité, on enlève la sonde à HC et on la remplace par deux capteurs de température en amont et en aval du catalyseur. Le calculateur mesure la différence de température entre l'entrée et la sortie des gaz de ce catalyseur d'amorçage et évalue l'efficacité de traitement des hydrocarbures à froid ou en régime moteur stabilisé.

Dans les deux cas, le procédé estime ensuite l'état de la surface catalytique $N_{ES}$ du catalyseur 5 à partir du régime moteur N et de la pression collecteur $P_{coll}$.

Grâce aux deux diagnostics distincts des catalyseurs d'amorçage d'une part et de stockage d'autre part, le procédé de surveillance selon l'invention permet une excellente appréciation de l'efficacité de traitement des hydrocarbures de tous les pots catalytiques disposés dans le flux des gaz d'échappement.

**Revendications**

**1.** Procédé de surveillance du fonctionnement d'au moins deux pots catalytiques équipant le circuit des gaz d'échappement d'un moteur à combustion interne, piloté par un calculateur de contrôle et fonctionnant en mélange air-carburant pauvre, au moins un pot catalytique étant de type pot d'amorçage à faible capacité d'absorption en oxygène et proche du moteur, suivi d'un pot catalytique de type stockage des oxydes d'azote, **caractérisé en ce qu'**il réalise deux diagnostics distincts et simultanés :

- une évaluation de l'efficacité de traitement des hydrocarbures (Nes) par le pot catalytique d'amorçage (5) ;
- une évaluation de la capacité d'absorption en oxygène (OSC) par le pot catalytique de stockage (6), après chaque phase de commutation de la richesse passant d'une valeur (Rp) correspondant à un mélange pauvre à une valeur (Rr) correspondant à un mélange riche ou stoechiométrique, cette commutation servant à purger le pot catalytique des oxydes d'azote stockés ;
- une comparaison du résultat de ces deux évaluations simultanées (NES, OSC) avec une courbe de référence ($C_{HC}$) représentant la limite de l'ensemble des combinaisons possibles de pots catalytiques d'amorçage d'une part et de stockage d'autre part, le fonctionnement desdits au moins deux pots catalytiques d'amorçage et de stockage étant jugé satisfaisant, en terme de traitement d'hydrocarbure, lorsque le résultat de ces deux évaluations simultanées est situé au-delà de ladite courbe de référence, et étant jugé insatisfaisant, en terme de traitement d'hydrocarbure, lorsque le résultat de ces deux évaluations simultanées est situé en deçà de ladite courbe.

**2.** Procédé de surveillance selon la revendication 1, **caractérisé en ce que** l'évaluation de l'efficacité de fonctionnement du catalyseur de stockage (6) consiste à

- mesurer la concentration en oxygène $[O_2]_{out}$ en aval du pot catalytique (6) ;
- mesurer le temps de retard ($TIC_1$) que la concentration en oxygène $[O_2]_{out}$, qui a chuté en-dessous d'un seuil (V1) prédéfini jusqu'à une valeur $[O_2]_2$ très inférieure en fin de purge du catalyseur en mélange riche, met à repasser au-dessus du seuil ($V_1$) alors que le mélange est à nouveau pauvre après la régénération des pièges à oxydes d'azote ;

- estimer la capacité de stockage en oxygène (OSC) du catalyseur (6) à partir d'une part du temps de retard($TIC_1$) et d'autre part d'une table g ($P_{coll}$, N), définie lors de la mise au point du moteur à partir de la pression ($P_{coll}$) dans le collecteur d'admission et du régime (N) du moteur, et mémorisée dans le calculateur de contrôle moteur, selon la formule :

$$OSC = TIC_1 * g(P_{coll}, N).$$

**3.** Procédé de surveillance selon la revendication 1, **caractérisé en ce que** l'évaluation de l'efficacité de fonctionnement du catalyseur de stockage (6) consiste à

- mesurer la concentration en oxygène $[O_2]_{out}$ en aval du catalyseur (6) et la concentration en oxygène $[O_2]_{in}$ en amont du catalyseur(6) ;
- mesurer le temps de retard ($TIC_2$) entre les passages respectifs des deux concentrations $[O_2]_{out}$ et $[O_2]$ in au-dessus d'un seuil prédéfini ($V_2$) après chaque purge du catalyseur en mélange riche, alors que le moteur fonctionne à nouveau en mélange pauvre ;
- estimer la capacité de stockage en oxygène (OSC) du catalyseur (6) à partir d'une table h ($P_{coll}$, N) définie lors de la mise au point du moteur à partir de la pression ($P_{coll}$) dans le collecteur d'admission et du régime (N) du moteur, et mémorisée dans le calculateur de contrôle moteur, selon la formule :

$$OSC = TIC_2 * h (P_{coll}, N).$$

**4.** Procédé de surveillance selon la revendication 1, **caractérisé en ce que** l'évaluation de l'efficacité de fonctionnement du catalyseur de stockage (6) consiste à :

- mesurer la concentration en oxygène $[O_2]_{out}$ en aval du catalyseur de stockage (6) ;
- mesurer la concentration en hydrocarbures $[HC]_{out}$ en aval du catalyseur d'amorçage (5) ;
- mesurer le temps de retard (TIC)$_3$ entre le passage de la concentration $[HC]_{out}$ en hydrocarbures en-dessous d'un seuil prédéfini ($V_3$) et le passage de la concentration $[O_2]_{out}$ en oxygène au-dessus d'un seuil prédéfini ($V_1$) après chaque régénération des pièges à oxyde d'azote dans le catalyseur (6) ;

- estimer la capacité de stockage en oxygène (OSC) du catalyseur (6) à partir d'une table j ($P_{coll}$, N) définie lors de la mise au point du moteur à partir de la pression ($P_{coll}$) dans le collecteur d'admission et du régime (N) du moteur, et mémorisée dans le calculateur de contrôle moteur, selon la formule :

$$OSC = TIC_3 * J(P_{coll}, N).$$

**5.** Procédé de surveillance selon l'une des revendications 1, 2 ou 3, **caractérisé en ce que** l'évaluation de l'efficacité du traitement des hydrocarbures par le pot catalytique d'amorçage (5) consiste à :

- mesurer la concentration en hydrocarbures $[HC]_{out}$ en aval du catalyseur (5) ;
- estimer la concentration en hydrocarbures $[HC]_{in}$ en amont du catalyseur (5) à partir du régime moteur (N), de la pression($P_{coll}$) dans le collecteur d'admission et de la richesse du mélange air-carburant ;
- estimer l'état de la surface ($N_{ES}$) catalytique du catalyseur (5) à partir de ces concentrations en hydrocarbures $[HC]_{out}$ et $[HC]_{in}$, du régime (N) et de la pression collecteur ($P_{coll}$).

**6.** Procédé de surveillance selon l'une des revendications 1, 2 ou 3, **caractérisé en ce que** l'évaluation de l'efficacité du traitement des hydrocarbures par le pot catalytique d'amorçage (5) consiste en :

- une mesure d'exothermicité lors de l'oxydation des réducteurs ;
- une estimation de l'état de la surface ($N_{ES}$) catalytique du catalyseur (5) à partir de ces concentrations en hydrocarbures $[HC]_{out}$ et $[HC]_{in}$, du régime (N) et de la pression collecteur($P_{coll}$).

**7.** Système de surveillance pour un moteur à combustion interne mettant en oeuvre le procédé selon la revendication 4, comprenant un calculateur electronique de contrôle et au moins un pot catalytique d'amorçage suivi d'au moins un pot catalytique de stockage des oxydes d'azotes, le système comprenant en outre:

- un capteur (10) de mesure de la concentration $[O_2]_{out}$ en oxygène placé en aval du pot catalytique (6) de stockage ;
- un capteur (8) de mesure du régime (N) du moteur ;

le système étant **caractérisé en ce qu'**il comprend :

- un capteur (7) de mesure de la concentration [HC] $_{out}$ en hydrocarbures placé en aval du pot catalytique (5) ;
- un capteur (9) de pression (P$_{coll}$) dans le collecteur (2) d'admission du moteur,

chacun desdits capteurs délivrant des informations au calculateur électronique (11) et ledit calculateur électronique étant adapté pour évaluer l'efficacité de fonctionnement de l'ensemble des pots catalytiques en terme de traitement d'hydrocarbures, en fonction desdites informations délivrées en effectuant deux diagnostics distincts et simultanés de chaque pot catalytique.

**Patentansprüche**

1. Verfahren zur Überwachung des Betriebs von mindestens zwei Katalysatortöpfen, die die Abgasleitung eines Verbrennungsmotors ausstatten, der von einem Steuerrechner gesteuert wird und der mit einem mageren Gemisch betrieben wird, wobei mindestens ein Katalysatortopf vom Typ Vorkatalysatortopf mit schwacher Sauerstoffabsorbierungskapazität und nahe am Motor ist, gefolgt von einem Katalysatortopf vom Typ Stickoxidspeicher, **dadurch gekennzeichnet, dass** es zwei verschiedene und simultane Diagnosen durchführt:

- eine Bewertung der Effizienz der Behandlung von Kohlenwasserstoffen (N$_{ES}$) durch den Vorkatalysatortopf (5);
- eine Bewertung der Kapazität der Sauerstoffabsorbierung (OSC) durch den Speicherkatalysator (6), nach jeder Phase des Wechsels des Mischungsverhältnisses, das von einem Wert (Rp), der einem Magermix entspricht, auf einen Wert (Rr) übergeht, der einem fetten oder stöchiometrischen Gemisch entspricht, wobei dieser Wechsel dazu dient, den Katalysatortopf von eingelagerten Stickoxyden zu befreien;
- ein Vergleich des Ergebnisses dieser zwei simultanen Bewertungen (N$_{ES}$, OSC) mit einer Referenzkurve (C$_{HC}$), die die Grenze der Gesamtheit der möglichen Kombinationen von Vorkatalysatortopf einerseits und Speicherkatalysator andererseits darstellt, wobei der Betrieb der mindestens zwei Katalysatortöpfe, Vorkatalysatortopf und Speicherkatalysatortopf, im Bezug auf die Kohlenwasserstoffbehandlung als zufriedenstellend beurteilt wird, wenn sich das Ergebnis dieser zwei simultanen Bewertungen jenseits der Referenzkurve befindet, und wobei es im Bezug auf die Kohlenwasserstoffbehandlung als ungenügend beurteilt wird, wenn sich das Ergebnis dieser zwei simultanen Bewertungen diesseits der Kurve befindet.

2. Verfahren zur Überwachung gemäß Anspruch 1, **dadurch gekennzeichnet, dass** die Bewertung der Effizienz des Betriebs des Speicherkatalysators (6) besteht aus:

- dem Messen der Sauerstoffkonzentration [O$_2$]$_{out}$ nach dem Katalysatortopf (6);
- dem Messen der Verzögerungszeit (TIC$_1$), die die Sauerstoffkonzentration [O$_2$]$_{out}$, die unter eine vorbestimmte Schwelle (V$_1$) bis zu einem viel niedrigeren Wert [O$_2$]$_2$ gefallen ist am Ende der Entleerung des Katalysators bei fettem Gemisch, braucht, um wieder über eine Schwelle (V$_1$) zu kommen, während das Gemisch nach der Regeneration der Stickoxidfallen erneut mager ist;
- dem Schätzen der Sauerstoffspeicherkapazität (OSC) des Katalysators (6), ausgehend von der Verzögerungszeit (TIC$_1$) einerseits und einer Tabelle g(P$_{coll}$, N) andererseits, die bei der Einstellung des Motors ausgehend vom Druck (P$_{coll}$) im Ansaugkrümmer und der Drehzahl (N) des Motors definiert wird, und im Motorsteuerrechner gespeichert wird gemäß der Formel:

$$OSC = TIC_1 * g(P_{coll}, N).$$

3. Verfahren zur Überwachung gemäß Anspruch 1, **dadurch gekennzeichnet, dass** die Bewertung der Effizienz des Betriebs des Speicherkatalysators (6) besteht aus:

- dem Messen der Sauerstoffkonzentration [O$_2$]$_{out}$ nach dem Katalysator (6) und der Sauerstoffkonzentration [O$_2$]$_{in}$ vor dem Katalysator (6);
- dem Messen der Verzögerungszeit (TIC$_2$) zwischen dem jeweiligen Überschreiten der zwei Konzentrationen [O$_2$]$_{out}$ und [O$_2$]$_{in}$ einer vorbestimmten Schwelle (V$_2$) nach jeder Reinigung des Katalysators bei fettem Gemisch, während der Motor erneut mit Magermix betrieben wird;
- dem Schätzen der Sauerstoffspeicherkapazität (OSC) des Katalysators (6), ausgehend von einer Tabelle h(P$_{coll}$, N), die bei der Einstellung des Motors ausgehend vom Druck (P$_{coll}$) im Ansaugkrümmer und der Drehzahl (N) des Motors definiert wird, und im Motorsteuerrechner gespeichert wird gemäß der Formel:

$$OSC = TIC_2 * h(P_{coll}, N).$$

4. Verfahren zur Überwachung gemäß Anspruch 1, **dadurch gekennzeichnet, dass** die Bewertung der Effizienz des Betriebs des Speicherkatalysators (6) besteht aus:

-   dem Messen der Sauerstoffkonzentration $[O_2]_{out}$ nach dem Katalysator (6);
-   dem Messen der Kohlenwasserstoffkonzentration $[HC]_{out}$ nach dem Vorkatalysator (5);
-   dem Messen der Verzögerungszeit $(TIC)_3$ zwischen dem Unterschreiten der Kohlenwasserstoffkonzentration $[HC]_{out}$ einer vorbestimmten Schwelle $(V_3)$ und dem Überschreiten der Sauerstoffkonzentration $[O_2]_{out}$ einer vorbestimmten Schwelle $(V_1)$ nach jeder Regeneration der Stickoxidfallen im Katalysator (6);
-   dem Schätzen der Sauerstoffspeicherkapazität (OSC) des Katalysators (6), ausgehend von einer Tabelle $j(P_{coll}, N)$, die bei der Einstellung des Motors ausgehend vom Druck $(P_{coll})$ im Ansaugkrümmer und der Drehzahl (N) des Motors definiert wird, und im Motorsteuerrechner gespeichert wird gemäß der Formel:

$$OSC = TIC_3 * j(P_{coll}, N).$$

5.  Verfahren zur Überwachung gemäß einem der Ansprüche 1, 2 oder 3,
    **dadurch gekennzeichnet, dass** die Bewertung der Effizienz der Behandlung der Kohlenwasserstoffe durch den Vorkatalysatortopf (5) besteht aus:

-   dem Messen der Kohlenwasserstoffkonzentration $[HC]_{out}$ nach dem Katalysator (5),
-   dem Schätzen der Kohlenwasserstoffkonzentration $[HC]_{in}$ vor dem Katalysator (5), ausgehend von der Motordrehzahl (N), dem Druck $(P_{coll})$ im Ansaugkrümmer und dem Mischungsverhältnis Luft-Kraftstoff;
-   dem Schätzen des Zustands der katalytischen Oberfläche $(N_{ES})$ des Katalysators (5), ausgehend von diesen Kohlenwasserstoffkonzentrationen $[HC]_{out}$ und $[HC]_{in}$, der Drehzahl (N) und dem Krümmerdruck $(P_{coll})$.

6.  Verfahren zur Überwachung gemäß einem der Ansprüche 1, 2 oder 3,
    **dadurch gekennzeichnet, dass** die Bewertung der Effizienz der Behandlung der Kohlenwasserstoffe durch den Vorkatalysatortopf (5) besteht aus:

-   einer Messung der Exothermizität bei der Oxidation der Reduktionsmittel;
-   einer Schätzung des Zustands der katalytischen Oberfläche $(N_{ES})$ des Katalysators (5), ausgehend von diesen Kohlenwasserstoffkonzentrationen $[HC]_{out}$ und $[HC]_{in}$, der Drehzahl (N) und dem Krümmerdruck $(P_{coll})$.

7.  System zur Überwachung für einen Verbrennungsmotor, das das Verfahren gemäß Anspruch 4 einsetzt, umfassend einen elektronischen Steuerrechner und mindestens einen Vorkatalysatortopf gefolgt von mindestens einem Stickoxidspeicher-Katalysatortopf, wobei das System darüber hinaus umfasst:

-   einen Sensor (10) zur Messung der Sauerstoffkonzentration $[O_2]_{out}$, der nach dem Speicherkatalysatortopf (6) angeordnet ist;
-   einen Sensor (8) zur Messung der Drehzahl (N) des Motors;

wobei das System **dadurch gekennzeichnet ist, dass** es umfasst:

-   einen Sensor (7) zur Messung der Kohlenwasserstoffkonzentration $[HC]_{out}$, der nach dem Katalysatortopf (5) angeordnet ist,
-   einen Sensor (9) für den Druck $(P_{coll})$ im Ansaugkrümmer (2) des Motors,

wobei jeder der Sensoren dem elektronischen Rechner (11) Informationen liefert und der elektronische Rechner angepasst ist, die Effizienz des Betriebs der Gesamtheit der Katalysatortöpfe im Bezug auf die Behandlung der Kohlenwasserstoffe zu bewerten, in Abhängigkeit der gelieferten Informationen, indem er zwei verschiedene und simultane Diagnosen jedes Katalysatortopfs durchführt.

**Claims**

1.  A method of monitoring the operation of at least two catalytic converters fitted in the exhaust gas circuit of an internal combustion engine, driven by a control computer and operating with a lean air/fuel mixture, at least one catalytic converter being of the primer converter type with a low oxygen absorption capacity and disposed close to the engine, followed by a catalytic converter of the nitrogen oxide storage type, **characterised in that** it carries out two separate and simultaneous diagnoses:

-   an evaluation of the efficiency of treatment of the hydrocarbons $(N_{ES})$ by the primer catalytic converter (5),
-   an evaluation of the oxygen absorption capacity (OSC) of the storage catalytic converter (6), after each phase of switching of the richness from a value (Rp) corresponding to a lean mixture to a value (Rr) corresponding to a rich or stoicbiometric mixture, this switching enabling the catalytic converter to be purged of stored nitrogen oxides,
-   a comparison of the result of these two simultaneous evaluations ($N_{ES}$, OSC) with a reference curve ($C_{HC}$) representing the limit of all the possible combinations of primer catalytic converters, on one hand, and storage catalytic converters, on the other hand, the operation of at least these two primer and storage catalytic converters being deemed satisfactory, in terms of hydrocarbon treatment, when the result of these two simultaneous evaluations is disposed above the reference curve, and being deemed unsatisfactory, in terms of hydrocarbon treatment, when the result of these two simultaneous evaluations is disposed below this curve.

2. A monitoring method as claimed in claim 1, **characterised in that** the evaluation of the efficiency of operation of the storage catalyst (6) consists in:

- measuring the oxygen concentration $[O_2]_{out}$ downstream of the catalytic converter (6),
- measuring the delay time ($TIC_1$) that the oxygen concentration $[O_2]_{out}$, which has fallen below a predetermined threshold ($V_1$) to a much lower value $[O_2]_2$ at the end of the purge of the catalyst in rich mixture, takes to return above the threshold ($V_1$) when the mixture is again lean after the regeneration of the nitrogen oxide traps,
- estimating the oxygen storage capacity (OSC) of the catalyst (6) from a delay time ($TIC_1$) and a table g ($P_{coll}$, N) formulated when the engine is being developed from the pressure ($P_{coll}$) in the intake manifold and the speed (N) of the engine, and stored in the engine control computer, according to the formula:

$$OSC = TIC_1 * g (P_{coll}, N).$$

3. A monitoring method as claimed in claim 1, **characterised in that** the evaluation of the efficiency of operation of the storage catalyst (6) consists in:

- measuring the oxygen concentration $[O_2]_{out}$ downstream of the catalyst (6) and the oxygen concentration $[O_2]_{in}$ upstream of the catalyst (6),
- measuring the delay time ($TIC_2$) between the respective passages of the two concentrations $[O_2]_{out}$ and $[O_2]_{in}$ above a predetermined threshold ($V_2$) after each purge of the catalyst in rich mixture, when the engine is again operating with a lean mixture,
- estimating the oxygen storage capacity (OSC) of the catalyst (6) from a table h ($P_{coll}$, N) formulated when the engine is being developed from the pressure ($P_{coll}$) in the intake manifold and the speed (N) of the engine, and stored in the engine control computer, according to the formula:

$$OSC = TIC_2 * h (P_{coll}, N).$$

4. A monitoring method as claimed in claim 1, **characterised in that** the evaluation of the efficiency of operation of the storage catalyst (6) consists in:

- measuring the oxygen concentration $[O_2]_{out}$ downstream of the storage catalyst (6),
- measuring the hydrocarbon concentration $[HC]_{out}$ downstream of the primer catalyst (5),
- measuring the delay time ($TIC_3$) between the passage of the hydrocarbon concentration $[HC]_{out}$ below a predetermined threshold ($V_3$) and the passage of the oxygen concentration $[O_2]_{out}$ above a predetermined threshold ($V_1$) after each regeneration of the nitrogen oxide traps in the catalyst (6),
- estimating the oxygen storage capacity (OSC) of the catalyst (6) from a table j ($P_{coll}$, N) formulated when the engine is being developed from the pressure ($P_{coll}$) in the intake manifold and the speed (N) of the engine, and stored in the engine control computer, according to the formula:

$$OSC = TIC_3 * j (P_{coll}, N).$$

5. A monitoring method as claimed in one of claims 1, 2 or 3, **characterised in that** the evaluation of the efficiency of treatment of the hydrocarbons by the primer catalytic converter (5) consists in:

- measuring the hydrocarbon concentration $[HC]_{out}$ downstream of the catalyst (5),
- estimating the hydrocarbon content $[HC]_{in}$ upstream of the catalyst (5) from the engine speed (N), the pressure ($P_{coll}$) in the intake manifold and the richness of the air/fuel mixture,
- estimating the state of the catalytic surface ($N_{ES}$) of the catalyst (5) from these hydrocarbon contents $[HC]_{out}$ and $[HC]_{in}$, the speed (N) and the manifold pressure ($P_{coll}$).

6. A monitoring method as claimed in one of claims 1, 2 or 3, **characterised in that** the efficiency of treatment of the hydrocarbons by the primer catalytic converter (5) consists in:

- measuring exothermicity during the oxidation of the reducing agents,
- estimating the state of the catalytic surface ($N_{ES}$) of the catalyst (5) from these hydrocar-

bon contents $[HC]_{out}$ and $[HC]_{in}$, the speed (N) and the manifold pressure ($P_{coll}$).

7. A monitoring system for an internal combustion engine applying the method as claimed in claim 4, comprising an electronic control computer and at least one primer catalytic converter followed by at least one nitrogen oxide storage catalytic converter, the system further comprising:

- a sensor (10) measuring the oxygen concentration $[O_2]_{out}$ disposed downstream of the storage catalytic converter (6),
- a sensor (8) measuring the speed (N) of the engine,

the system being **characterised in that** it comprises:

- a sensor (7) measuring the hydrocarbon content $[HC]_{out}$ disposed downstream of the catalytic converter (5),
- a sensor (9) of the pressure ($P_{coll}$) in the intake manifold (2) of the engine,

each of these sensors supplying data to the electronic computer (11) and the electronic computer being adapted to evaluate the operating efficiency of all the catalytic converters in terms of hydrocarbon treatment as a function of the data supplied, by carrying out two separate and simultaneous diagnoses of each catalytic converter.

# FIG_1

$P_{coll}$

N

$S_A$

$[HC]_{out}$

$[O_2]_{out}$

$[O_2]_{in}$

FIG_2

FIG_3

FIG_4

FIG_5